# EUROPÄISCHE PATENTANMELDUNG

(11) **EP 3 101 367 A1**
(43) Veröffentlichungstag der Anmeldung: **07.12.2016**
(21) Anmeldenummer: 15170300.6
(22) Anmeldetag: 02.06.2015
(51) Int. Cl.: F24J 2/52, F24J 2/46

(54) **SOLARSYSTEM**

(71) Anmelder: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Schweiger, Johannes

(57) **Zusammenfassung**

Die Erfindung betrifft ein Solarsystem.

## Beschreibung

Die Erfindung betrifft ein Solarsystem.

Erfindungsgemäß wird unter einem Solarsystem ein System verstanden, welches ein Solarmodul und Aufstellmittel, durch welche das Solarmodul auf einem Untergrund aufstellbar ist, umfasst.

Ein Solarmodul bezeichnet bekanntermaßen ein plattenförmiges Modul, mit dessen Hilfe Sonnenenergie nutzbar gemacht werden kann. Ein solches Solarmodul umfasst einen Rahmen, üblicherweise einen Aluminiumprofil-Rahmen, in dem ein Photovoltaikelement oder ein Solarkollektor angeordnet ist. Ein Photovoltaikmodul wandelt das Licht der Sonne durch Solarzellen in elektrische Energie um. Ein Solarkollektor ist eine Vorrichtung zur Sammlung der im Sonnenlicht enthaltenen thermischen Energie. Beispielsweise sind solche Solarkollektoren, die auch als Sonnenkollektoren bezeichnet werden, in Form thermischer Solarkollektoren bekannt.

Um Solarmodule in geographischen Breiten jenseits einer Äquatornähe in einem optimalen Winkel zu Sonne ausrichten zu können, werden Solarmodule bevorzugt schräg zu einem horizontalen Untergrund angeordnet.

Hierzu können Solarmodule beispielsweise mit Hilfe von sogenannten Dachhaken auf einem Schrägdach angeordnet werden.

Zur schrägen Anordnung von Solarmodulen auf einem horizontalen Untergrund, beispielsweise auf einem Flachdach, werden Aufstellmittel verwendet, die auch als Solaraufsteller oder Solarträger bezeichnet werden.

Aufstellmittel für Solarmodule sind in verschiedensten Ausführungsformen bekannt. Üblicherweise umfassen solche Aufstellmittel für Solarmodule ein auf einem Untergrund befestigbares Schienensystem, auf dem Stützmittel zur Halterung der Solarmodule fixiert sind. Üblicherweise sind solche Aufstellmittel nach dem Stand der Technik aus metallischen Werkstoffen gefertigt.

Grundsätzlich haben sich solche Aufstellmittel nach dem Stand der Technik zur schrägen Aufstellung von Solarmodulen auf einem horizontalen Untergrund bewährt. Nachteilig ist bei den meisten Systemen jedoch, dass diese kompliziert aufzubauen sind. Ferner ist häufig die Befestigung der Solarmodule an den Aufstellmitteln nur mühsam zu bewerkstelligen.

Nachteilig an den aus dem Stand der Technik bekannten Aufstellmitteln für Solarmodule kann es ferner sein, dass die Aufstellmittel und Solarmodule vor der Befestigung der Solarmodule an den Aufstellmitteln zunächst exakt zueinander auszurichten sind, um eine optimale Befestigung der Solarmodule an den Aufstellmitteln und eine gewünschte Neigung der Aufstellmittel zum Untergrund erreichen zu können.

Der vorliegenden Erfindung liegt die Aufgabe zugrunde, ein Solarsystem zur Verfügung zu stellen, bei welchem die Aufstellmittel zur Halterung der Solarmodule schnell und einfach auf einem Untergrund aufstellbar sind. Ferner soll die Halterung beziehungsweise Befestigung des Solarmoduls an den Aufstellmitteln besonders einfach zu bewerkstelligen sein.

Eine weitere Aufgabe der Erfindung besteht darin, ein Solarsystem zur Verfügung zu stellen, bei welchem die Ausrichtung von Solarmodul und Aufstellmitteln zueinander einfach zu bewerkstelligen ist, so dass die Solarmodule stets optimal an den Aufstellmitteln befestigt und in einem optimalen Neigungswinkel zum Untergrund angeordnet sind.

Zur Lösung dieser Aufgabe wird erfindungsgemäß ein Solarsystem mit folgenden Merkmalen zur Verfügung gestellt:
Einem Solarmodul, das die folgenden Merkmale umfasst:
   - einen Rahmen mit einem rechteckigen Außenumfang;
   - in dem Rahmen ist ein Photovoltaikelement oder ein Solarkollektor angeordnet;
wenigstens zwei Aufstellmitteln, durch die das Solarmodul auf einem Untergrund aufstellbar ist, wobei jedes der Aufstellmittel als einstückiges Kunststoffformteil ausgebildet ist, das die folgenden Abschnitte umfasst:
- einen plattenförmigen Abschnitt, der sich von einer ersten Seitenkante bis zu einer der ersten Seitenkante gegenüberliegenden, zweiten Seitenkante erstreckt, wobei der plattenförmige Abschnitt zwischen der ersten und zweiten Seitenkante einen Auflagebereich umfasst, auf dem das Solarmodul aufliegt;
- einen ersten Aufstellabschnitt und einen zweiten Aufstellabschnitt, wobei der erste Aufstellabschnitt im Bereich der ersten Seitenkante und der zweite Aufstellabschnitt im Bereich der zweiten Seitenkante des plattenförmigen Abschnitts an diesem angeordnet ist und wobei der erste und zweite Aufstellabschnitt derart ausgebildet sind, dass das Aufstellmittel derart über den ersten und zweiten Aufstellabschnitt auf einem horizontalen Untergrund aufstellbar ist, dass der plattenförmige Abschnitt in einer von seiner ersten Seitenkante zu seiner zweiten Seitenkante aufsteigenden Stellung auf dem Untergrund aufstellbar ist, wobei der Auflagebereich bei Aufstellung des Aufstellmittels über den ersten und zweiten Aufstellabschnitt auf einem horizontalen Untergrund von diesem weg weist;
- einen ersten Halterungsabschnitt und einen zweiten Halterungsabschnitt, wobei der erste Halterungsabschnitt im Bereich der ersten Seitenkante und der zweite Halterungsabschnitt im Bereich der zweiten Seitenkante des plattenförmigen Abschnitts an diesem angeordnet ist und wobei der erste und zweite Halterungsabschnitt unter Umgreifung des Rahmens des Solarmoduls dieses am Aufstellmittel halten;
wobei die Aufstellmittel ausschließlich über das Solarmodul miteinander verbunden sind.

Ein Kerngedanke des erfindungsgemäßen Solarsystems besteht darin, dass ein Solarmodul an wenigstens zwei Aufstellmitteln in Form einstückiger Kunststoffformteile befestigt und über diese auf einem Untergrund aufstellbar ist.

Um dabei eine möglichst einfache und optimale Befestigung der Solarmodule an den Aufstellmitteln erreichen zu können, sind diese auf die erfindungsgemäße Art und Weise gestaltet.

Die erfindungsgemäße Gestaltung der Aufstellmittel ermöglicht es, dass das an den Aufstellmitteln befestigte Solarmodul ohne weitere Mittel unmittelbar auf einem horizontalen Untergrund aufstellbar und in einer schrägen Stellung zu diesem anordenbar ist. Aufgrund der Einstückigkeit der Aufstellmittel entfällt ein komplizierter Zusammenbau der Aufstellmittel. Vielmehr ist das Solarmodul mit wenigen Handgriffen an den Aufstellmitteln befestigbar und über diese auf einem Untergrund aufstellbar.

Gleichzeitig entfällt aufgrund der Einstückigkeit der Aufstellmittel die Notwendigkeit, das Solarmodul und die Aufstellmittel zueinander justieren zu müssen, um eine optimale Befestigung der Solarmodule an den Aufstellmitteln und eine optimale Ausrichtung des Solarmoduls zum Untergrund erreichen zu können. Vielmehr ist die Ausrichtung des Solarmoduls zu den Aufstellmitteln und der Neigungswinkel des Solarmoduls zum Untergrund durch die Gestaltung der Aufstellmittel bereits vorgegeben. Dies hat insbesondere auch den Vorteil, dass das erfindungsgemäße Solarsystem insbesondere auch durch Laien schnell und einfach installierbar und auf einem Untergrund aufstellbar ist.

Das Solarmodul des erfindungsgemäßen Solarsystems kann insbesondere ein Solarmodul nach dem Stand der Technik sein. Insofern kann das Solarmodul insbesondere eine plattenförmige beziehungsweise tafelförmige Grundform mit einem rechteckigen Außenumfang aufweisen. Dabei umfasst das Solarmodul einen Rahmen mit einem recheckigen Außenumfang, der die Außenkontur des Solarmoduls vorgibt. Der Rahmen kann insbesondere ein Metallprofil-Rahmen, bevorzugt ein Aluminiumprofil-Rahmen sein. In dem Rahmen ist ein Photovoltaikelement oder ein Solarkollektor angeordnet.

Das Solarmodul des erfindungsgemäßen Solarsystems ist erfindungsgemäß nunmehr über wenigstens zwei Aufstellmittel, an denen das Solarmodul erfindungsgemäß gehaltert ist, auf einem Untergrund aufstellbar, wobei jedes der Aufstellmittel als einstückiges Kunststoffformteil ausgebildet ist und jeweils die erfindungsgemäß beschriebenen Merkmale aufweist.

Die Aufstellmittel bestehen aus Kunststoff, bevorzugt aus einem thermoplastischen Kunststoff beziehungsweise einem Thermoplasten. Besonders bevorzugt bestehen die Aufstellmittel aus Kunststoff in Form von Polyethylen (PE), besonders bevorzugt aus Polyethylen mit schwach verzweigten Polymerketten beziehungsweise einem Polyethylen hoher Dichte (HDPE), insbesondere einem Polyethylen mit einer Dichte im Bereich von 0,94 bis 0,97 g/cm³.

Ein erfindungsgemäßes Solarsystem, bei dem das Solarmodul an entsprechend einstückigen Kunststoffformteilen als Aufstellmittel gehaltert ist, hat erhebliche Vorteile.

Neben den vorbezeichneten Vorteilen der einfachen Montage der Solarmodule an den Aufstellmitteln und der einfachen Aufstellung des Solarsystems auf einem Untergrund, haben die Aufstellmittel in Form einstückiger Kunststoffformteile insbesondere auch den Vorteil, dass diese besonders einfach und kostengünstig herzustellen sind. Nach einer Ausführungsform ist vorgesehen, dass die Aufstellmittel in Form von thermogeformten, einstückigen Kunststoffformteilen vorliegen. Nach einer alternativen Ausführungsform ist vorgesehen, die Aufstellmittel in Form von spritzgegossenen, einstückigen Kunststoffformteilen vorzusehen.

Sowohl durch Thermoformung, die gelegentlich als Tiefziehen bezeichnet wird, als auch durch Spritzguss lassen sich Kunststoffformteile besonders einfach und kostengünstig herstellen.

Ein weiterer Vorteil von Aufstellmitteln in Form einstückiger Kunststoffformteilen liegt darin, dass diese mit einem besonders geringen Gewicht zur Verfügung gestellt werden können, so dass diese einfach zu transportieren und zu handhaben sind. Nach einer Ausführungsform kann vorgesehen sein, dass die Aufstellmittel jeweils nur ein Gewicht im Bereich von 1,0 bis 2,5 kg aufweisen, also beispielsweise ein Gewicht von wenigstens 1 oder 1,2 oder 1,4 oder 1,6 kg und beispielsweise ein Gewicht von höchstens 2,5 oder 2,2 oder 2,0 oder 1,8 kg.

Ein weiterer Vorteil von Aufstellmitteln in Form einstückiger Kunststoffformteile liegt darin, dass diese sehr einfach bearbeitbar sind. Beispielsweise können die Aufstellmittel auch noch am Ort ihrer Aufstellung sehr einfach durch Werkzeuge bearbeitet werden, beispielsweise mit Löchern, Aussparungen oder dergleichen versehen werden, beispielsweise zur Kabeldurchführung.

Schließlich liegt ein weiterer Vorteil von Aufstellmitteln in Form einstückiger Kunststoffformteile darin, dass diese aufgrund ihres einheitlichen Werkstoffes sehr einfach zu recyceln sind.

Erfindungsgemäß hat sich herausgestellt, dass die erfindungsgemäßen Aufstellmittel in Form einstückiger Kunststoffformteile besonders gute Eigenschaften aufweisen, wenn diese eine Wandstärke im Bereich von 3 bis 5 mm aufweisen, also beispielsweise eine Wandstärke von wenistens 3,0 oder 3,2 oder 3,4 oder 3,5 mm und beispielsweise eine Wandstärke von höchstens 5 oder 4,5 oder 4 mm. Insofern können die Aufstellmittel, soweit sie durch Thermoformung oder Spritzguss hergestellt sind, beispielsweise aus Kunststoffplatten mit einer entsprechenden Stärke beziehungsweise Dicke hergestellt werden.

Mit einer solch erfindungsgemäßen Dicke lassen sich die Aufstellmittel mit wenig Materialaufwand kostengünstig herstellen und weisen gleichzeitig eine für die Aufstellung eines Solarmoduls auf einem Untergrund notwendige Festigkeit auf.

Um eine einfache Befestigung und sichere Halterung des Solarmoduls an den Aufstellmitteln sowie die Aufstellung des Solarmoduls auf einem Untergrund mit einem Neigungswinkel erreichen zu können, weist jedes der Aufstellmittel erfindungsgemäß konfektionierte Abschnitte auf.

Insofern weist jedes Aufstellmittel einen plattenförmigen Abschnitt auf, der sich von einer ersten Seitenkante bis zu einer der ersten Seitenkante gegenüberliegenden, zweiten Seitenkante des plattenförmigen Abschnitts erstreckt. Zwischen dieser ersten und zweiten Seitenkante umfasst der plattenförmige Abschnitt einen Bereich, der hierin als Auflagebereich bezeichnet wird, und auf dem das Solarmodul bei seiner Halterung am Aufstellmittel auf diesem aufliegt.

Der plattenförmige Abschnitt des Aufstellmittels ist im Wesentlichen plattenförmig beziehungsweise tafelförmig ausgebildet. Der Vorteil einer solchen Plattenform besteht insbesondere auch darin, dass der plattenförmige Abschnitt aufgrund seiner Plattenform in der Plattenebene eine hohe Festigkeit aufweist, insbesondere nur eine geringe Dehnbarkeit, beziehungsweise Spreizbarkeit. Dies hat unter anderem den besonderen Vorteil, dass ein Dehnen oder Aufspreizen des Aufstellmittels in der Ebene des plattenförmigen Abschnitt praktisch nicht möglich ist, wodurch das an dem plattenförmigen Abschnitt gehalterte Solarmodul praktisch nicht unbeabsichtigt vom Aufstellmittel lösbar ist.

Ferner hat die Plattenform des plattenförmigen Abschnitts den Vorteil, dass hierdurch das auf dem Auflagebereich des plattenförmigen Abschnitts aufliegende Solarmodul über die gesamte oder einen Großteil der Distanz zwischen der ersten und zweiten Seitekante in Kontakt mit dem Auflagebereich stehen kann beziehungsweise auf diesem Aufliegen kann, sodass der plattenförmige Abschnitt eine wesentliche Stütze für das Solarmodul bieten kann und insbesondere ein Durchbiegen des Solarmoduls in seiner an den Aufstellmitteln gehalterten Lage verhindert werden kann.

Nach einer Ausführungsform ist vorgesehen, dass der plattenförmige Abschnitt profiliert ist, als eine Profilierung beziehungsweise räumliche Gestaltung aufweist. Hierdurch kann der plattenförmige Abschnitt insbesondere in besonderer Weise versteift sein. Beispielsweise kann der plattenförmige Abschnitt insbesondere eine Profilierung in Form einer oder mehrerer Versteifungsrippen aufweisen. Durch eine solche Profilierung kann der plattenförmige Abschnitt besonders steif konfektioniert werden, ohne dass hierdurch ein wesentlicher zusätzlicher Materialaufwand notwendig wäre. Der Vorteil einer Profilierung des plattenförmigen Abschnitts durch Versteifungsrippen liegt insbesondere auch darin, dass ein solche Versteifungsrippen aufweisender, plattenförmiger Abschnitt ohne weiteres mittels Thermoformen oder Spritzgießen des Aufstellmittels formbar ist.

Nach einer bevorzugten Ausführungsform ist vorgesehen, dass Versteifungsrippen, die der plattenförmige Abschnitt aufweist, sich von der ersten Seitenkante bis zu der zweiten Seitenkante des plattenförmigen Abschnitts erstrecken. Solche Versteifungsrippen führen in besonderer Weise zu einer Festigkeit des plattenförmigen Abschnitts, durch welche ein Solarmodul besonders fest am plattenförmigen Abschnitt halterbar ist. Gleichzeitig ermöglichen solche von der ersten zur zweiten Seitenkante sich erstreckende Versteifungsrippen eine Auflage des Solarmoduls auf dem Auflagebereich über die gesamte Länge des Solarmoduls hinweg.

Als weitere Abschnitte umfasst jedes Aufstellmittel einen ersten Aufstellabschnitt und einen zweiten Aufstellabschnitt. Der ersten und zweite Aufstellabschnitt sind jeweils derart ausgebildet, dass das Aufstellmittel über den ersten und zweiten Aufstellabschnitt derart auf einem horizontalen Untergrund aufstellbar ist, dass der plattenförmige Abschnitt in einer von seiner ersten Seitenkante zu seiner zweiten Seitenkante aufsteigenden Stellung auf dem Untergrund aufstellbar ist und der Auflagebereich des plattenförmigen Abschnitts bei einer solchen Aufstellung des Aufstellmittels auf einem horizontalen Untergrund von diesem weg weist. Dabei ist der erste Aufstellabschnitt im Bereich der ersten Seitenkante des plattenförmigen Abschnitts und der zweite Aufstellabschnitt im Bereich der zweiten Seitenkante des plattenförmigen Abschnitts an diesem angeordnet. Der erste und zweite Aufstellabschnitt könne jeweils unmittelbar an der ersten beziehungsweise zweiten Seitenkante des plattenförmigen Abschnitts an diesem angeordnet sein oder beispielsweise in einem Bereich der ersten und zweiten Seitenkante, der benachbart zur ersten beziehungsweise zweiten Seitenkante ist. Nach einer bevorzugten Ausführungsform ist vorgesehen, dass der erste und zweite Aufstellabschnitt als Fortbildung des Verlaufs des plattenförmigen Abschnitts ausgebildet sind. Mit anderen Worten: Der erste und zweite Aufstellabschnitt können im Wesentlich als Fortführung des plattenförmigen Abschnitts beziehungsweise des Verlaufs des plattenförmigen Abschnitts konfektioniert sein, wobei der plattenförmige Abschnitt im Bereich seiner ersten Seitekante in den ersten Aufstellabschnitt und im Bereich seiner zweiten Seitekante in den zweiten Aufstellabschnitt übergeht. Der Übergangsbereich vom plattenförmigen Abschnitt in den ersten und zweiten Aufstellabschnitt vollzieht sich dabei in Form einer Knickkante beziehungsweise eines Knicks, wobei diese Knickkante jeweils im Bereich der ersten beziehungsweise zweiten Seitenkante des plattenförmigen Abschnitts angeordnet ist. Der besondere Vorteil solcher, als Fortbildung des Verlaufs des plattenförmigen Abschnitts ausgebildeter erster und zweiter Aufstellabschnitte liegt insbesondere darin, dass ein derart konfektioniertes Aufstellmittel besonders einfach durch Thermoformen oder Spritzgießen herzustellen ist.

Soweit der plattenförmige Abschnitt wie vorstehend ausgeführte Versteifungsrippen aufweist, kann sich auch der Verlauf dieser Versteifungsrippen in dem ersten und zweiten Aufstellabschnitt fortsetzen. Durch erste und zweite Aufstellabschnitte, die Versteifungsrippen aufweisen, kann auch die Steifigkeit des ersten und zweiten Aufstellabschnitts in besonderer Weise verbessert sein.

Grundsätzlich können der erste und zweite Aufstellabschnitt eine beliebige Gestaltung aufweisen, die es gestattet, das Aufstellmittel mit dem daran gehalterten Solarmodul auf einem horizontalen Untergrund aufzustellen.

Nach einer Ausführungsform ist vorgesehen, dass der erste und zweite Aufstellabschnitt fußseitig, also an ihrem bei Aufstellung des Aufstellmittels auf einem Untergrund in Kontakt mit dem Untergrund tretenden Bereich beziehungsweise bei dem auf dem Untergrund aufliegenden Bereich, Abschnitte aufweist, auf die Beschwerungsmittel auflegbar sind, wenn das Aufstellmittel über den ersten und zweiten Aufstellabschnitt auf einem Untergrund aufgestellt ist. Durch solche Beschwerungsmittel kann die Standfestigkeit der Aufstellmittel auf einem Untergrund erhöht werden. Bekannt sind solche Beschwerungsmittel beispielsweise in Form von Steinplatten. Nach einer Ausführungsform kann daher vorgesehen sein, dass der erste und zweite Aufstellabschnitt jeweils wenigstens einen fußseitigen Abschnitt aufweisen, auf dem solche Beschwerungsmittel auflegbar sind. Nach einer Fortbildung dieses Erfindungsgedankens kann vorgesehen sein, dass solche fußseitigen Abschnitte eine randseitige Wand aufweisen, um ein Verrutschen der Beschwerungsmittel von dem fußseitigen Bereich zu erschweren.

Sowohl der erste, als auch der zweite Aufstellabschnitt können jeweils ein- oder mehrgliedrig gestaltet sein. Beispielsweise könnte der erste und/oder der zweite Aufstellabschnitt jeweils aus einem oder mehreren Abschnitten bestehen, die beispielsweise jeweils im Bereich der ersten und/oder der zweiten Seitenkante des plattenförmigen Abschnitts angeordnet und jeweils zur Aufstellung auf einem Untergrund ausgebildet sein können.

Der Auflagebereich ist derart an dem plattenförmigen Abschnitt angeordnet, dass dieser bei Aufstellung des Aufstellmittels über den ersten und zweiten Aufstellabschnitt auf einem horizontalen Untergrund vom Untergrund weg weist, also nach oben beziehungsweise zum Himmel hin weist. Hierdurch ist ein über den ersten und zweiten Halterungsabschnitt am Auflagebereich gehaltertes Solarmodul zur Sonne hin ausrichtbar.

Indem der erste und zweite Aufstellabschnitt ferner derart ausgebildet sind, dass das Aufstellmittel über den ersten und zweiten Aufstellabschnitt derart auf einem horizontalen Untergrund aufstellbar ist, dass der plattenförmige Abschnitt in einer von seiner ersten Seitenkante zu seiner zweiten Seitenkante aufsteigenden Stellung auf dem Untergrund aufstellbar ist, ist das Solarmodul in einer solch aufsteigenden beziehungsweise schrägen Stellung zur Sonne hin ausrichtbar. Der gewünschte Grad dieser schrägen Stellung ist durch den Aufbau der Aufstellmittel vorgegeben. Beispielsweise kann gewünscht sein, dass der plattenförmige Abschnitt derart von seiner ersten Seitekante zu seiner zweiten Seitekante aufsteigt, dass das an dem plattenförmigen Abschnitt gehalterte Solarmodul mit einem Neigungswinkel im Bereich von 10° bis 25° Grad zum horizontalen Untergrund geneigt ist. Insofern können der erste und zweite Aufstellabschnitt derart ausgebildet sein, dass ein an dem plattenförmigen Abschnitt gehaltertes Solarmodul in einem Neigungswinkel im Bereich von 10° bis 25° Grad zum Untergrund angeordnet ist, wenn das Solarmodul über die Aufstellmittel auf einem horizontalen Untergrund aufgestellt ist.

Um den ersten und zweiten Aufstellabschnitt derart auszubilden, dass das Aufstellmittel über diese derart auf einem horizontalen Untergrund aufstellbar ist, dass der plattenförmige Abschnitt in einer von seiner ersten Seitenkante zu seiner zweiten Seitenkante aufsteigenden Stellung auf dem Untergrund aufstellbar ist, stehen dem Fachmann zahlreiche Möglichkeiten zur Verfügung. Beispielsweise kann der erste Aufstellabschnitt kürzer ausgebildet sein, als der zweite Aufstellabschnitt. Alternativ oder kumulativ kann der erste Aufstellabschnitt beispielsweise in einem anderen Winkel als der zweite Aufstellabschnitt zum plattenförmigen Abschnitt verlaufen, wodurch sich ebenfalls die gewünschte Schrägstellung des plattenförmigen Abschnitts bei Aufstellung des Aufstellmittels über die Aufstellabschnitte auf einem horizontalen Untergrund ergibt.

Die Halterungsabschnitte des Aufstellmittels dienen zur Halterung des Solarmoduls am plattenförmigen Abschnitt des Aufstellmittels. Konkret ist ein erster Halterungsabschnitt im Bereich der ersten Seitenkante und ein zweiter Halterungsabschnitt im Bereich der zweiten Seitenkante des plattenförmigen Abschnitts vorgesehen. Der erste und zweite Halterungsabschnitt sind dabei jeweils derart ausgebildet, dass diese unter Umgreifung des Rahmens des Solarmoduls dieses am Aufstellmittel beziehungsweise am plattenförmigen Abschnitt des Aufstellmittels halten, wenn das Solarmodul auf dem Auflagebereich des plattenförmigen Abschnitts aufliegt. Der erste und zweite Halterungsabschnitt können unmittelbar an der ersten beziehungsweise zweiten Seitenkante des plattenförmigen Abschnitts oder beispielsweise in einem sich daran anschließenden Bereich angeordnet sein, beispielsweise im einem sich daran anschließenden Bereich des plattenförmigen Abschnitts oder der Aufstellabschnitte. Die Halterungsabschnitte sind derart gestaltet, dass diese unter Umgreifung des Rahmens beziehungsweise eines oder mehrerer Abschnitte des Rahmes des Solarmoduls dieses am Aufstellmittel halten.

Der erste und zweite Halterungsabschnitt können jeweils ein- oder mehrgliedrig gestaltet sein, also beispielsweise jeweils aus einem oder mehreren einzelnen Abschnitten bestehen.

Nach einer bevorzugten Ausführungsform sind der erste und zweite Halterungsabschnitt jeweils derart gestaltet, dass diese im Bereich der ersten und zweiten Seitenkante des plattenförmigen Abschnitts jeweils einen Spalt ausbilden, in dem das Solarmodul mit einem Abschnitt seines Rahmens jeweils derart einlegbar beziehungsweise einsteckbar ist, dass das Solarmodul am plattenförmigen Abschnitt und damit am Aufstellmittel halterbar ist. Zur Ausbildung eines solchen Spaltes können der erste und zweite Halterungsabschnitt beispielsweise jeweils einen ersten Abschnitt aufweisen, der sich vom Bereich der jeweils ersten und zweiten Seitenkante des plattenförmigen Abschnitts weg erstreckt und jeweils einen zweiten Abschnitt aufweisen, der sich von diesem ersten Abschnitt mit Abstand zum Auflagebereich weg erstreckt, wobei dieser zweite Abschnitt des ersten Halterungsabschnitts zur zweiten Seitenkante und dieser zweite Abschnitt des zweiten Halterungsabschnitts zur ersten Seitenkante hin gerichtet ist. Hierdurch weisen die Halterungsabschnitte im Wesentlich jeweils im Querschnitt eine L-Form auf.

Nach einer besonders bevorzugten Ausführungsform ist das Solarmodul bei seiner Auflage auf dem Auflagebereich rastend über die Halterungsabschnitte gehaltert ist beziehungsweise über die Halterungsabschnitte auf dem Auflagebereich verrastet. Hierzu können die Halterungsabschnitte insbesondere federnd ausgebildet sein, so dass das Solarmodul mittels der Halterungsabschnitte auf den Auflagebereich aufrastbar beziehungsweise aufclipsbar ist. Dabei kann insbesondere vorgesehen sein, dass die Halterungsabschnitte mit Hinterschnitt ausgebildet sind; dabei greift der Rahmen beziehungsweise greifen Abschnitte des Rahmens des Solarmoduls jeweils in den hinterschnittenen Teil der Halterungsabschnitte ein, so dass der jeweils hinterschnittene Teil der Halterungsabschnitte den Rahmen des Solarmoduls umgreift.

Die Verrastung des Solarmoduls mit den Aufstellmitteln ist im übrigen dadurch begünstigt, dass die Aufstellmittel aus Kunststoff ausgebildet sind. Hierdurch ergibt sich in der Regel die notwendige Flexibilität beziehungsweise Elastizität der Halterungsabschnitte, um eine Aufrastung des Solarmoduls auf den Auflagebereich zu ermöglichen. Nach einer Ausführungsform kann vorgesehen sein, die Halterungsabschnitte flexibel auszubilden, insbesondere in solcher Weise flexibel auszubilden, dass das Solarmodul über die Halterungsabschnitte auf der Auflagefläche verrastbar ist.

Nach einer Ausführungsform ist vorgesehen, dass die Aufstellmittel im Bereich des ersten und/oder des zweiten Halterungsabschnitts wenigstens eine Öffnung aufweist, beispielsweise zur Kabeldurchführung.

Ein zentraler Erfindungsgedanke des erfindungsgemäßen Solarsystems besteht schließlich darin, dass die Aufstellmittel des erfindungsgemäßen Solarsystems untereinander ausschließlich über das Solarmodul miteinander verbunden sind. Aufgrund der erfindungsgemäßen, konstruktiven Gestaltung des Solarsystems bilden die Aufstellmittel und der Rahmen des Solarmoduls eine konstruktive Einheit, die das Photovoltaikelement oder den Solarkollektor des Solarmoduls halten. Indem der Rahmen des Solarmoduls durch die Halterungsabschnitte der Aufstellmittel an diesen gehaltert ist, werden zur Aufstellung des Photovoltaikelements oder Solarkollektors durch das erfindungsgemäße Solarsystem neben dem Rahmen des Solarmoduls und den wenigstens zwei Aufstellmitteln keine weiteren Elemente benötigt, um ein Photovoltaikelement oder Solarkollektor auf einem Untergrund aufzustellen. Der Rahmen des Solarmoduls hat insoweit, im Gegensatz zu den aus dem Stand der Technik bekannten Solarsystemen, nicht nur die Funktion, ein Photovoltaikelement oder einen Solarkollektor zu halten, sondern bildet gleichzeitig zusammen mit den Aufstellmitteln ein konstruktives Element zur Aufstellung des Photovoltaikelements oder des Solarkollektors auf einem Untergrund.

Nach einer bevorzugten Ausführungsform ist vorgesehen, dass das erfindungsgemäße Solarsystem genau zwei Aufstellmittel aufweist. Bei einem solchen Solarsystem ist das Solarmodul demnach nur mit Hilfe von zwei Aufstellmitteln auf einem Untergrund aufstellbar.

Bevorzugt kann bei einer solchen Ausführungsform der Rahmen des Solarmoduls an zwei gegenüberliegenden, endseitigen Bereichen des Solarmoduls jeweils an einem Aufstellmittel gehaltert sein. In dem Bereich zwischen diesen beiden Aufstellmitteln ist das Photovoltaikelement oder der Solarkollektor des Solarsystems allein durch den Rahmen gehalten. Insofern ist das erfindungsgemäße Solarsystem insgesamt unter sehr geringem Materialeinsatz konfektionierbar, da der Bereich des Solarsystems zwischen den einzelnen Aufstellmitteln keine weiteren konstruktiven Elemente benötigt, um das Photovoltaikelement oder den Solarkollektor zu haltern. Gleichzeitig ermöglicht der Freiraum zwischen den Aufstellmitteln des erfindungsgemäßen Solarsystems eine besonders einfache Wartung und Reparatur des Solarsystems, da insbesondere das Solarmodul in diesem Freiraum zwischen den Aufstellmitteln von allen Seiten frei zugänglich ist.

Bevorzugt ist das Solarmodul, wie zuvor ausgeführt, an zwei gegenüberliegenden, endseitigen Bereichen jeweils mit seinem Rahmen an jeweils einem Aufstellmittel gehaltert. Selbstverständlich kann der Rahmen des Solarmoduls jedoch auch an einer höheren Anzahl von Aufstellmitteln gehaltert sein, beispielsweise an drei, vier oder mehr Aufstellmitteln. Die gewünschte Anzahl der Aufstellmittel kann insbesondere in Abhängigkeit von der Dimension des Solarmoduls festgelegt sein.

Gegenstand der Erfindung ist auch eine Solaranlage, die mehrere erfindungsgemäße Solarsysteme umfasst. Beispielsweise kann vorgesehen sein, dass eine Solaranlage mehrere in einer Reihe nebeneinander angeordnete, erfindungsgemäße Solarsysteme umfasst. Nach einer Ausführungsform ist dabei beispielsweise vorgesehen, dass an einem Aufstellmittel gleichzeitig die Rahmen zweier benachbarter Solarmodule gehaltert sind. Insofern wird für eine Anzahl von n Solarmodulen einer erfindungsgemäßen Solaranlage eine Anzahl von n-1 Aufstellmitteln zur Aufstellung der Solarmodule auf einem Untergrund über die erfindungsgemäßen Aufstellmittel benötigt.

Nach einer bevorzugten Ausführungsform ist vorgesehen, dass die Aufstellmittel derart ausgebildet sind, dass diese stapelbar sind. Insofern kann beispielsweise insbesondere vorgesehen sein, die Aufstellmittel derart auszubilden, dass die Aufstellmittel unter gleichzeitiger partieller Ineinanderfügbarkeit stapelbar sind. Hierdurch sind die Aufstellmittel besonders platzsparend stapelbar. Um eine solche Stapelbarkeit der Aufstellmittel unter einem gleichzeitigen partiellen Ineinanderfügen der Aufstellmittel zu ermöglichen, kann insbesondere vorgesehen sein, dass wenigstens einer des ersten und zweiten Aufstellabschnitts nach außen weggeknickt ist.

Weitere Merkmale der Erfindung ergeben sich aus den Ansprüchen sowie den Figuren und der zugehörigen Figurenbeschreibung.

Sämtliche Merkmale der Erfindung können, einzeln oder in Kombination, beliebig miteinander kombiniert sein.

Ein Ausführungsbeispiels eines erfindungsgemäßen Solarsystems sowie einer erfindungsgemäßen Solaranlage werden anhand der nachfolgenden Figurenbeschreibung unter Bezugnahme auf die Figuren 1 bis 4 näher erläutert.

Dabei zeigt
- Figur 1: eine erfindungsgemäße Solaranlage, die zwei erfindungsgemäße Solarsysteme umfasst, in einer perspektivischen Ansicht von schräg oben,
- Figur 2: die Anlage gemäß Figur 1, wobei die Solarmodule der Solarsysteme der besseren Darstellbarkeit halber transparent dargestellt sind,
- Figur 3: eine Darstellung der in der Solaranlage gemäß Figur 1 verwendeten Aufstellmittel in einer perspektivischen Ansicht von schräg oben, und
- Figur 4: eine Darstellung des Aufstellmittels gemäß Figur 3 in einer Seitenansicht.

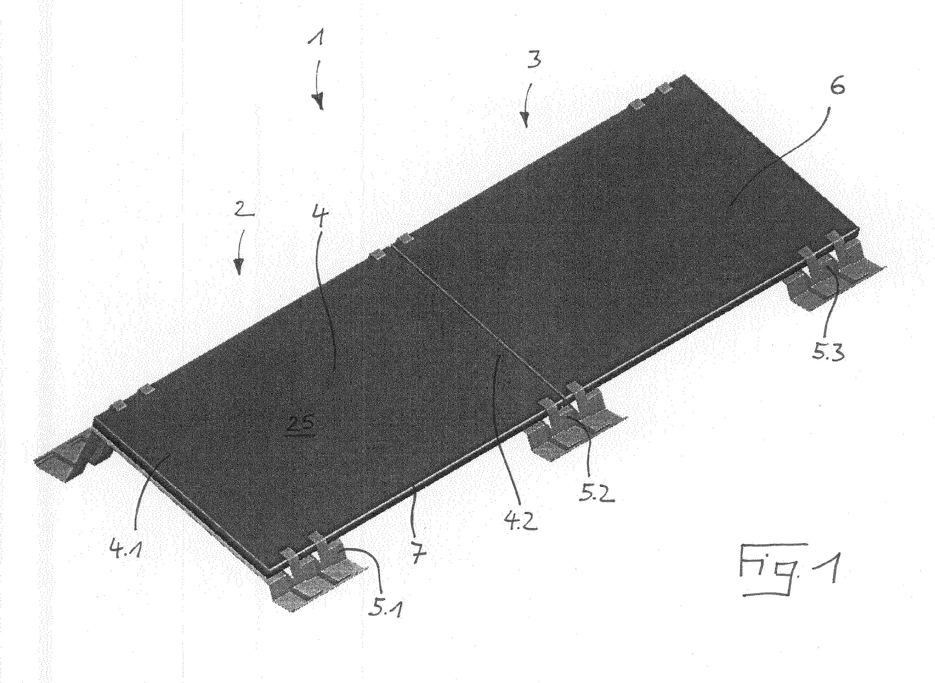

Das Ausführungsbeispiel der in Figur 1 dargestellten Solaranlage ist in seiner Gesamtheit mit dem Bezugszeichen 1 gekennzeichnet. Die Solaranlage 1 umfasst ein erstes Solarsystem 2 und ein zweites Solarsystem 3. Das Solarsystem 2 umfasst ein Solarmodul 4 sowie zwei Aufstellmittel 5.1 und 5.2. Das zweite Solarsystem 3 umfasst ein Solarmodul 6 sowie zwei Aufstellmittel 5.2 und 5.3. Das Aufstellmittel 5.2 bildet sowohl ein Aufstellmittel des Solarsystems 2 als auch ein Aufstellmittel des Solarsystems 3.

Nachfolgend wird das Solarsystem 2 näher beschrieben, wobei die Ausführungen zu den Merkmalen des Solarsystems 2 für das Solarsystem 3 entsprechend gelten.

Das Solarmodul 4 ist ein typisches, tafelförmiges Solarmodul mit einer rechteckigen Außenkontur. Die Außenkontur des Solarmoduls 4 wird von einem Aluminiumprofil-Rahmen 7 gebildet, in dem ein Photovoltaikelement 25 angeordnet ist. Die beiden Aufstellmittel 5.1, 5.2 des Solarsystems 2 sind identisch gestaltet.

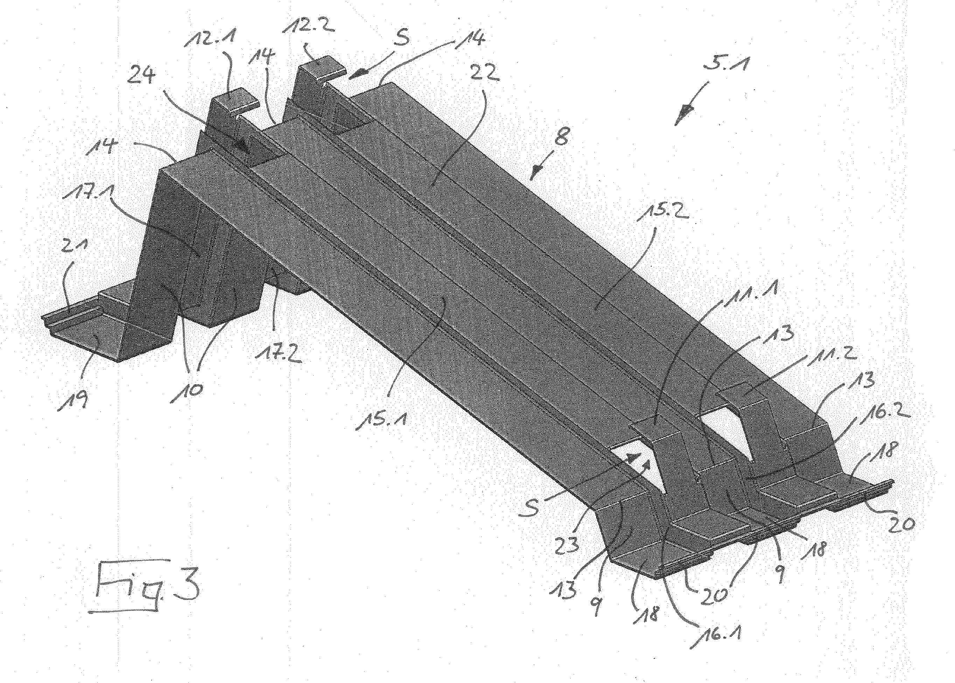

In Figur 3 ist das Aufstellmittel 5.1 isoliert, also ohne das daran gehalterte Solarmodul 4, und vergrößert dargestellt, sodass die Darstellung in Figur 3 die Details des Aufstellmittels 5.1 besser erkennen lässt. Das Aufstellmittel 5.1 liegt als thermogeformtes, einstückiges Kunststoffformteil aus Polyethylen hoher Dichte (HDPE) vor. Die Wandstärke des Aufstellmittels 5.1 beträgt etwa 3,7 mm und seine Dichte etwa 0,95 g/cm³. Die Gesamtmasse des Aufstellmittels 5.1 liegt bei etwa 1,7 kg.

Das Aufstellmittel 5.1 umfasst einen plattenförmigen Abschnitt 8, einen ersten Aufstellabschnitt 9, einen zweiten Aufstellabschnitt 10, einen ersten Halterungsabschnitt 11.1, 11.2 und einen zweiten Halterungsabschnitt 12.1, 12.2.

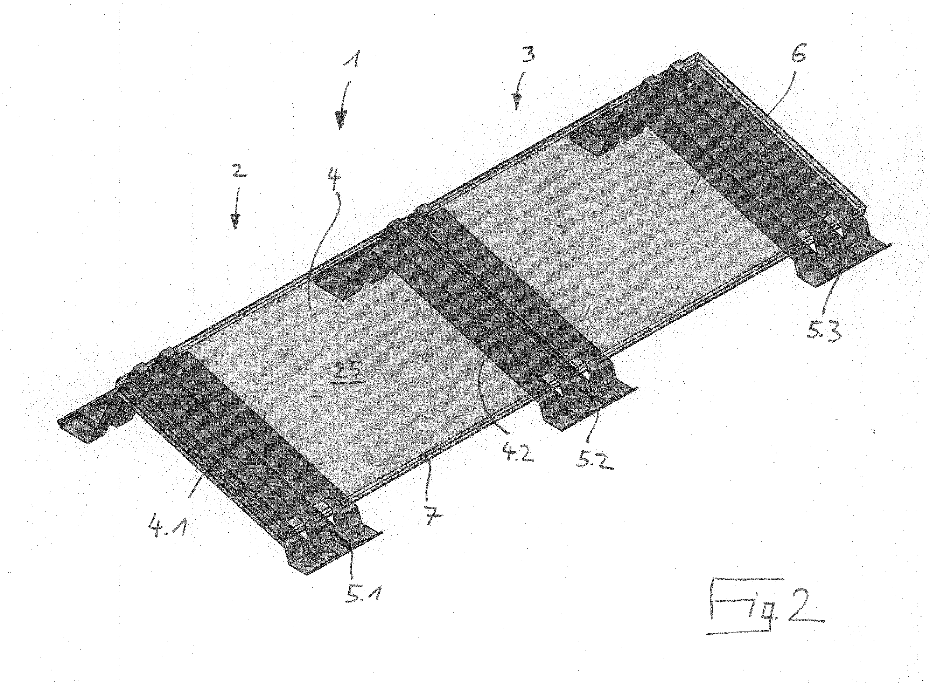

Der plattenförmige Abschnitt 8 erstreckt sich von einer ersten Seitenkante 13 des plattenförmigen Abschnitts 8 bis zu einer der ersten Seitenkante 13 gegenüberliegenden, zweiten Seitenkante 14 des plattenförmigen Abschnitts 8. Der plattenförmige Abschnitt 8 ist in Form einer profilierten Tafel beziehungsweise Platte ausgebildet, wobei die Profilierung in Form von Versteifungsrippen 15.1, 15.2 vorgesehen ist, die von der ersten Seitenkante 13 bis zur zweiten Seitenkante 14 des plattenförmigen Abschnitts 8 verlaufen. Zwischen der ersten Seitenkante 13 und der zweiten Seitenkante 14 umfasst der plattenförmige Abschnitt 8 einen Auflagebereich 22, auf den das Solarmodul 4 (siehe Figuren 1 und 2) auflegbar ist. Im Ausführungsbeispiel liegt das Solarmodul 4 über seine ganze Länge zwischen seinen gegenüberliegenden Seitenkanten auf den Oberseiten der Rippen 15.1, 15.2 auf, womit eine Durchbiegung des Solarmoduls 4 in diesem Bereich verhindert werden kann.

Der erste Aufstellabschnitt 9 sowie der zweite Aufstellabschnitt 10 sind als Fortbildung des Verlaufs des plattenförmigen Abschnitts 8 ausgebildet, wobei der Verlauf des plattenförmigen Abschnitts 8 ab der ersten Seitenkante 13 in den ersten Aufstellabschnitt 9 und ab der zweiten Seitenkante 14 in den zweiten Aufstellabschnitt 10 übergeht. Die Knickkante, ab welcher der plattenförmige Abschnitt 8 in den ersten Aufstellabschnitt 9 übergeht, bildet dabei die erste Seitenkante 13 des plattenförmigen Abschnitts 8, und die Knickkante, ab der der plattenförmige Abschnitt 8 in den zweiten Aufstellabschnitt 10 übergeht, bildet dabei die zweite Seitenkante 14 des plattenförmigen Abschnitts 8. Auch der Verlauf der Versteifungsrippen 15.1, 15.2 des plattenförmigen Abschnitts 8 ist bei dem ersten Aufstellabschnitt 9 und dem zweiten Aufstellabschnitt 10 fortgebildet, so dass auch der erste Aufstellabschnitt 9 und der zweite Aufstellabschnitt 10 Versteifungsrippen 16.1, 16.2 beziehungsweise 17.1, 17.2 aufweisen.

An ihrem jeweils fußseitigen Bereich weisen der erste und der zweite Aufstellabschnitt 9, 10 jeweils Abschnitte 18, 19 auf, auf die Beschwerungsmittel auflegbar sind, wenn das Aufstellmittel 5.1 mit den fußseitigen Bereichen der ersten und zweiten Aufstellabschnitt 9, 10 auf einem Untergrund aufliegt. Diese Abschnitte 18, 19 weisen jeweils eine randseitige Wand 20, 21 auf, um ein Verrutschen von Beschwerungsmitteln (nicht dargestellt) von den Abschnitte 18, 19 zu erschweren.

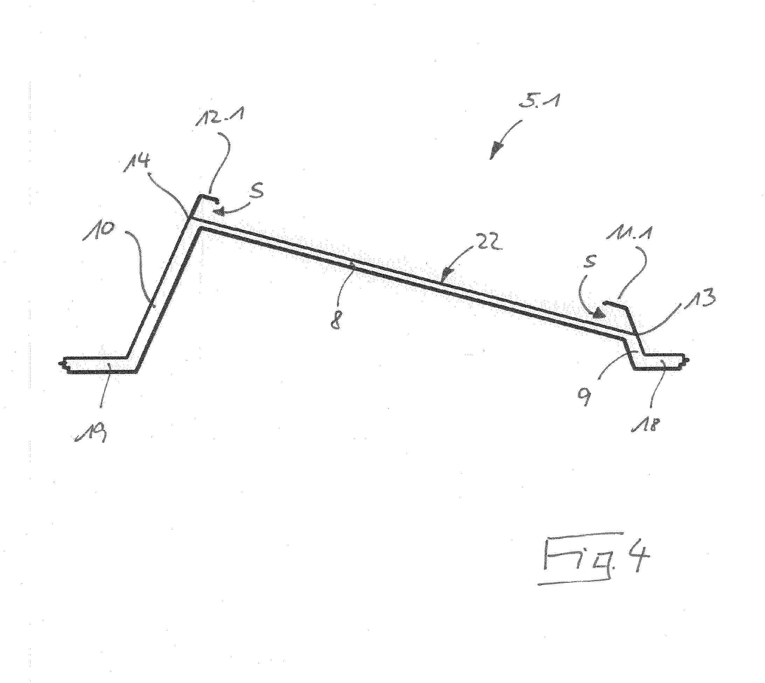

Wie im Ausführungsbeispiel, insbesondere in Figur 4, deutlich erkennbar, sind der erste und zweite Aufstellabschnitt 9, 10 derart ausgebildet, dass das Aufstellmittel 5.1 derart über den ersten und zweiten Aufstellabschnitt 9, 10 auf einem horizontalen Untergrund aufstellbar ist, dass der plattenförmige Abschnitt 8 in einer von seiner ersten Seitenkante 13 zu seiner zweiten Seitenkante 14 aufsteigenden Stellung auf einem horizontalen Untergrund aufstellbar ist. Konkret ist hierzu im Ausführungsbeispiel der erste Aufstellabschnitt 9 kürzer als der zweite Aufstellabschnitt 10 ausgebildet, so dass sich insgesamt eine schräge Stellung des plattenförmigen Abschnitts 8 auf einem horizontalen Untergrund ergibt. Gleichzeitig ist bei einer solchen Aufstellung des Aufstellmittels 8 über die ersten und zweiten Aufstellabschnitt 9, 10 auf einem horizontalen Untergrund der Auflagebereich 22 nach oben, als vom Untergrund weg ausgerichtet.

Sowohl der erste Halterungsabschnitt 11.1, 11.2 als auch der zweite Halterungsabschnitt 12.1, 12.2 ist jeweils mehrgliedrig ausgebildet. Konkret bestehen sowohl der erste Halterungsabschnitt 11.1, 11.2 als auch der zweite Halterungsabschnitt 12.1, 12.2 aus jeweils zwei im Querschnitt L-förmigen Elementen, die jeweils einen Spalt S ausbilden, in dem das Solarmodul (siehe Figuren 1 und 2) mit einem Abschnitt seines Rahmens 7 einliegt. Dabei wird der Rahmen 7 des Solarmoduls 4 abschnittsweise durch den ersten Halterungsabschnitt 11.1, 11.2 und den zweiten Halterungsabschnitt 12.1, 12.2 umgriffen, so dass das Solarmodul am Aufstellmittel 5.1 gehaltert ist und gleichzeitig auf der Auflagefläche 22 des plattenförmigen Abschnitts 8 aufliegt.

Im Ausführungsbeispiel ist das Solarmodul 4 über die Halterungsabschnitte 11.1, 11.2, 12.1, 12.2 auf der Auflagefläche 22 verrastet. Dabei sind die Halterungsabschnitte 11.1, 11.2, 12.1, 12.2 derart flexibel ausgebildet, dass das diese leicht verbiegbar und hierdurch das Solarmodul 4 auf die Auflagefläche 22 aufrastbar ist. Dabei bildet der durch die Halterungsabschnitte 11.1, 11.2, 12.1, 12.2 ausgebildete Spalt S einen Hinterschnitt, hinter dem das Solarmodul 4 bei seiner Verrastung mit den von den Halterungsabschnitten 11.1, 11.2, 12.1, 12.2 umgriffenen Abschnitten seines Rahmens 7 einliegt.

Im Bereich des ersten Halterungsabschnitts 11.1, 11.2 und des zweiten Halterungsabschnitts 12.1, 12.2 sind Öffnungen 23, 24 im plattenförmigen Abschnitt 8 vorgesehen, durch die Kabel zur Verbindung mit dem Photovoltaikelement 25 des Solarmoduls 4 führbar sind. Deutlich zu erkennen ist in den Figuren 1 und 2, dass die Aufstellmittel 5.1 und 5.2 des Solarsystems 2 ausschließlich über das Solarmodul 4 miteinander verbunden sind. Zwischen den Aufstellmitteln 5.1, 5.2 verbleibt ein Freiraum, der beispielsweise eine einfache Wartung und Reparatur des Solarmoduls 4 erlaubt.

Zur Errichtung des erfindungsgemäßen Solarsystems 2 aus dem in dem Ausführungsbeispiel dargestellten Solarmodul 4 und den zwei Aufstellmitteln 5.1 und 5.2 wird das Solarmodul 4 an einem endseitigen Bereich 4.1 und an einem diesem Bereich gegenüberliegenden, endseitigen Bereich 4.2 jeweils auf ein Aufstellmittel 5.1 beziehungsweise 5.2 aufgerastet und auf einem Untergrund aufgestellt.

Zur Errichtung einer erfindungsgemäßen Solaranlage 1 werden mehrere solche Solarsysteme 2, 3 nebeneinander aufgestellt. Dabei können die nicht randseitigen Aufstellmittel, im Ausführungsbeispiels also das Aufstellmittel 5.2, gleichzeitig für zwei benachbarte Solarsysteme 2, 3 als Aufstellmittel 5.2 dienen. Dabei dient ein Abschnitt der Halterungsabschnitte 11.1, 11.2, 12.1, 12.2 zur Halterung des einen Solarsystems an diesem Aufstellmittel 5.1 und ein anderer Abschnitt der Halterungsabschnitte 11.1, 11.2, 12.1, 12.2 zur Halterung des benachbarten Solarsystems an diesem Aufstellmittel 5.1. Im Ausführungsbeispiel dient der Abschnitt 11.1 des Halterungsabschnitts 11.1, 11.2 und der Abschnitt 12.1 des Halterungsabschnitts 12.1, 12.2 zur Halterung des Solarmoduls 4 am Aufstellmittel 5.2 und der Abschnitt 11.2 des Halterungsabschnitts 11.1, 11.2 und der Abschnitt 12.2 des Halterungsabschnitts 12.1, 12.2 zur Halterung des Solarmoduls 6 am Aufstellmittel 5.2.

## Patentansprüche

1. Solarsystem (2) mit folgenden Merkmalen:
1. einem Solarmodul (4), das die folgenden Merkmale umfasst:
1.1 einen Rahmen (7) mit einem rechteckigen Außenumfang;
1.2 in dem Rahmen (7) ist ein Photovoltaikelement (25) oder ein Solarkollektor angeordnet;
2. wenigstens zwei Aufstellmitteln (5.1, 5.2),
2.1 durch die das Solarmodul (4) auf einem Untergrund aufstellbar ist, wobei
2.2 jedes der Aufstellmittel (5.1, 5.2) als einstückiges Kunststoffformteil ausgebildet ist, das die folgende Abschnitte umfasst:
2.2.1 einen plattenförmigen Abschnitt (8), der
2.2.1.1 sich von einer ersten Seitenkante (13) bis zu einer der ersten Seitenkante (13) gegenüberliegenden, zweiten Seitenkante (14) erstreckt, wobei
2.2.1.2 der plattenförmige Abschnitt (8) zwischen der ersten und zweiten Seitenkante (13, 14) einen Auflagebereich (22) umfasst, auf dem das Solarmodul (4) aufliegt;
2.2.2 einen ersten Aufstellabschnitt (9) und einen zweiten Aufstellabschnitt (10), wobei
2.2.2.1 der erste Aufstellabschnitt (8) im Bereich der ersten Seitenkante (13) und
2.2.2.2 der zweite Aufstellabschnitt (10) im Bereich der zweiten Seitenkante (14) des plattenförmigen Abschnitts (8) an diesem angeordnet ist und wobei
2.2.2.3 der erste und zweite Aufstellabschnitt (9, 10) derart ausgebildet sind, dass das Aufstellmittel (5.1) derart über den ersten und zweiten Aufstellabschnitt (9, 10) auf einem horizontalen Untergrund aufstellbar ist, dass der plattenförmige Abschnitt (8) in einer von seiner ersten Seitenkante (13) zu seiner zweiten Seitenkante (14) aufsteigenden Stellung auf dem Untergrund aufstellbar ist, wobei
2.2.2.4 der Auflagebereich (22) bei Aufstellung des Aufstellmittels (5.1) über den ersten und zweiten Aufstellabschnitt (9, 10) auf einem horizontalen Untergrund von diesem weg weist;
2.2.3 einen ersten Halterungsabschnitt (11.1, 11.2) und einen zweiten Halterungsabschnitt (12.1, 12.2), wobei
2.2.3.1 der erste Halterungsabschnitt (11.1, 11.2) im Bereich der ersten Seitenkante (13) und
2.2.3.2 der zweite Halterungsabschnitt (12.1, 12.2) im Bereich der zweiten Seitenkante (14) des plattenförmigen Abschnitts (8) an diesem angeordnet ist und wobei 2.2.3.3 der erste und zweite Halterungsabschnitt (11.1, 11.2, 12.1, 12.2) unter Umgreifung des Rahmens (7) des Solarmoduls (4) dieses am Aufstellmittel (5.1) halten;
3. wobei die Aufstellmittel (5.1, 5.2) ausschließlich über das Solarmodul (4) miteinander verbunden sind.

2. Solarsystem (2) nach Anspruch1 mit Aufstellmitteln (5.1, 5.2) in Form von thermogeformten, einstückigen Kunststoffformteilen.

3. Solarsystem (2) nach wenigstens einem der vorhergehenden Ansprüche mit Aufstellmitteln (5.1, 5.2) in Form von spritzgegossenen, einstückigen Kunststoffformteilen.

4. Solarsystem (2) nach wenigstens einem der vorhergehenden Ansprüche, wobei der plattenförmige Abschnitt (8) profiliert ist.

5. Solarsystem (2) nach wenigstens einem der vorhergehenden Ansprüche, bei dem das Solarmodul (4) rastend über die Halterungsabschnitte (11.1, 11.2, 12.1, 12.2) gehaltert ist.

6. Solarsystem (2) nach wenigstens einem der vorhergehenden Ansprüche, bei dem die Aufstellmittel (5.1, 5.2) stapelbar sind.
